# EUROPÄISCHE PATENTSCHRIFT

(11) **EP 3 620 917 B1**
(45) Veröffentlichungstag und Bekanntmachung des Hinweises auf die Patenterteilung: **27.10.2021**
(21) Anmeldenummer: 18192913.4
(22) Anmeldetag: 06.09.2018
(51) Int. Cl.: G06F 21/76, G06F 21/62, G06F 21/12, G06F 21/10, G06F 9/4401

(54) **VERWALTEN VON LIZENZEN FÜR SOFT-IP AUF EINEM PARTIELL REKONFIGURIERBAREN HARDWARE-SYSTEM**
MANAGEMENT OF LICENCES FOR SOFT IP ON A PARTIALLY RECONFIGURABLE HARDWARE SYSTEM
GESTION DE LICENCES POUR LOGICIEL IP SUR UN SYSTÈME MATÉRIEL PARTIELLEMENT RECONFIGURABLE

(43) Veröffentlichungstag der Anmeldung: 11.03.2020
(73) Patentinhaber: Siemens Aktiengesellschaft, 80333 München (DE)
(72) Erfinder: Fischer, Bernhard, 1120 Wien (AT); Cech, Christian, 2483 Ebreichsdorf (AT); Kofler, Amandus, 1040 Wien (AT); Matschnig, Martin, 3430 Tulln (AT)
(74) Vertreter: Maier, Daniel Oliver

(56) Entgegenhaltungen:
- US-A1- 2018 196 965
- US-B1- 6 904 527
- ROEL MAES ET AL: "A Pay-per-Use Licensing Scheme for Hardware IP Cores in Recent SRAM-Based FPGAs", IEEE TRANSACTIONS ON INFORMATION FORENSICS AND SECURITY, IEEE, PISCATAWAY, NJ, US, Bd. 7, Nr. 1, 1. Februar 2012 (2012-02-01) , Seiten 98-108, XP011396837, ISSN: 1556-6013, DOI: 10.1109/TIFS.2011.2169667

## Beschreibung

### Technisches Gebiet

Die Erfindung bezieht sich auf ein Verfahren zum Verwalten von Lizenzen für Soft-IPs auf einem partiell rekonfigurierbaren Hardware-System, insbesondere einem FPGA. Weiters umfasst die Erfindung ein entsprechendes partiell rekonfigurierbares Hardware-System, insbesondere ein FPGA.

Ein sogenanntes Field Programmable Gate Array (kurz FPGA) ist ein integrierter Schaltkreis der Digitaltechnik, in den eine logische Schaltung programmiert werden kann. Anders als bei der Programmierung von Computern oder Steuerungen bezieht sich hier das Programmieren nur in zweiter Linie auf die Vorgabe zeitlicher Abläufe im Baustein, sondern vor allem auf die Definition von dessen Funktionsstruktur. Durch die Programmierung der Verschaltung der vorgegebenen Elemente wird die Funktionsweise einzelner Logikelemente (Blöcke) im FPGA und deren Verschaltung untereinander festgelegt. Man spricht daher auch von der Konfiguration oder dem Design eines FPGA.

### Stand der Technik

Beim Design von rekonfigurierbaren Hardware-Systemen, z.B. FPGAs, bedienen sich die Systemdesigner in der Regel sogenannter Soft-IPs (lang: Soft Intellectual Properties). Soft-IP liegt in der Regel als Quellcode oder in Form einer Netzliste vor und wird im frei programmierbaren Bereich eines FPGAs implementiert. Daher gibt es häufig IP-Core Generatoren, mit denen der Anwender Soft-IP, etwa in Form von Netzlisten, für die verschiedenen FPGA Modelle eines Herstellers generieren kann. Typische Beispiele für Soft-IPs sind auf die jeweilige FPGA-Architektur optimierte Prozessorkerne (z.B. Soft-IP-Cores), welche samt ihren Programmen bei Bedarf in den FPGA integriert werden. Eine weitere Klasse sind Schnittstellencontroller für Busse, aber auch Controller zum Ansteuern von externen DRAM-Speichermodulen.

Die Soft-IPs werden meist zugekauft. Die Vergabe von Lizenzen zur Nutzung dieser Soft-IPs erfolgt entweder direkt für ein bestimmtes Zielgerät (use per device) oder für eine nicht limitierte Gruppe von Zielgeräten (Bulk Lizenz), welche meist teuer ist. Wurde die Lizenz vergeben und ist die Soft-IP auf dem Zielgerät in Betrieb, so ist der Zeitraum, in dem die Soft-IP betrieben wird, nicht mehr durch den Soft-IP Eigentümer (Lizenzgeber) kontrollierbar.

Es wäre für den Lizenzgeber vorteilhaft, wenn ein Nutzungszeitraum für die lizenzierte Soft-IP festgelegt und die Nutzung der Soft-IP über diesen Zeitraum hinaus erschwert oder verhindert werden könnte.

Bisherige Ansätze zum Lizenzmanagement beinhalten nur Lösungen, die den Betrieb einer proprietären Soft-IP auf einem rekonfigurierbaren Hardware-System ermöglichen, jedoch ohne praktische Möglichkeit einer zeitlichen Limitierung der Soft-IP-Nutzung.

Ein Ansatz beruht auf dem Prinzip, bei dem eine Geräteidentifikation (Device ID), z.B. eine eindeutige ID (ein Identifikator) eines FPGA, an den Soft-IP Lizenzgeber gesendet wird. In das Gerät wird ein vom Hersteller des Geräts, etwa dem Hersteller des FPGAs, zur Verfügung gestelltes Personalisierungsmodul eingespielt, in der Regel ein geheimer Schlüssel. Unter Benutzung dieses Schlüssels kann nun das Gerät mit der vom Soft-IP Lizenzgeber bereitgestellten Soft-IP, meist in der Form eines verschlüsselten Bitfiles, mit dazu passendem Schlüssel, basierend auf der Geräteidentifikation konfiguriert werden. Somit kann die Soft-IP in Form des Bitfiles nur für ein bestimmtes Gerät verwendet werden. Eine Mehrfachverwendung ist nicht möglich.

Ein ähnlicher Ansatz verwendet Public-Key-Kryptographie, um eine Soft-IP an ein bestimmtes Gerät zu binden.

Bei wieder einem anderen Ansatz verwaltet eine vertrauenswürdige "Metering Authority" einen oder mehrere Schlüssel, die jeweils eindeutig einer Kombination aus Geräteidentifikation eines FPGA und einer bestimmten Soft-IP zugeordnet werden. Ein Systemdesigner kann nun eine Soft-IP speziell für sein FPGA Gerät über einen "Metering Bitstream" als permanenter Teil im FPGA aktivieren, man nennt dies Device Enrollment, siehe dazu "A Pay-per-Use Licensing Scheme for Hardware IP Cores in Recent SRAM-Based FPGAs", Roel Maes, Dries Schellekens, Ingrid Verbauwhede, IEEE Transactions on Information Forensics and Security, Band 7, Nr. 1, Seiten 99-108, Februar 2012.

Aus dem Dokument US 2018/0196965 A1 ist ein Verfahren zum Authentifizieren und Lizenzieren von IP-geschützten Hardware-Modulen bekannt, welche selektiv aktiviert und genutzt werden können. Dazu werden Lizenzen für die IP-geschützten Hardware-Module generiert, welche nur für bestimmte Geräte mit einer eindeutigen Geräte-ID nutzbar sind und in einem Lizenzspeicher abgelegt werden. Die IP-geschützten Module können durch einen Lizenzserver mittels eines Aktivierungscode aktiviert werden, wobei der Aktivierungscode aus der Lizenz nur mit der eindeutigen Geräte-ID extrahiert werden kann.

Das Dokument US 6,904,527 B1 offenbart weiterhin ein Schutzverfahren für IP-Module in einer programmierbaren, logischen Schaltung. Die IP-Module können direkt an die Nutzer der programmierbaren, logischen Schaltung, welche eine eindeutige Kennung aufweist, lizensiert werden, wobei der Nutzer einen Autorisierungscode erhält, welcher für den Schutz und zum Überprüfen der berechtigten Nutzung des IP-geschützten Modules durch die programmierbare, logische Schaltung genutzt wird.

### Darstellung der Erfindung

Es ist eine Aufgabe der vorliegenden Erfindung, ein Verfahren zum Verwalten von Lizenzen für Soft-IP anzugeben, welches eine zeitliche Beschränkung der Nutzungsdauer einer auf einem rekonfigurierbaren Hardware-System installierten Soft-IP ermöglicht. Die zeitliche Beschränkung der Nutzungsdauer kann in einem vorgegebenen absoluten Zeitraum und/oder in einer vorgegebenen Dauer der tatsächlichen Verwendung der Soft-IP bestehen.

Die gestellte Aufgabe wird durch ein Verfahren mit den Merkmalen des Patentanspruchs 1 dadurch gelöst,
- dass in dem nicht konfigurierbaren Teil des Hardware-Systems, oder nur für den nicht konfigurierbaren Teil des Hardware-Systems zugänglich, ein Lizenzmanager vorgesehen ist, der exklusiven Zugriff auf einen nicht-flüchtigen Speicher besitzt, in welchem Lizenzdaten umfassend eine zeitliche Beschränkung der Nutzungsdauer zumindest einer Soft-IP hinterlegt sind,
- dass vor dem Aktivieren einer bestimmten Soft-IP der Lizenzmanager überprüft, ob die Nutzungsdauer abgelaufen ist, und
- dass der Lizenzmanager die Verwendung der Soft-IP nur freigibt, wenn die Nutzungsdauer noch nicht abgelaufen ist.

Durch den Lizenz-Manager können die tatsächlichen Nutzungszeiten protokolliert werden. Die Lizenzdaten enthalten die Nutzungsgrenze, ist diese erreicht, wird die Soft-IP vom Lizenzmanager deaktiviert.

Ein Vorteil des erfindungsgemäßen Verfahrens ist, dass keine Verbindung zu externen Lizenzservern oder anderweitigen externen Hilfsmitteln notwendig ist.

Der Lizenzmanager und der nicht-flüchtige Speicher für die Lizenzdaten können direkt im nicht konfigurierbaren Teil des Hardware-Systems angeordnet sein. Es ist aber auch möglich, dass der Lizenzmanager und der nicht-flüchtige Speicher für die Lizenzdaten in einem weiteren nicht-flüchtigen Speicher abgespeichert und dieser über Hardware mit dem nicht konfigurierbaren Teil des Hardware-Systems verbunden ist, sodass Lizenzmanager und Lizenzdaten vor Inbetriebnahme in das Hardware-System geladen werden. Der weitere nicht-flüchtige Speicher ist dabei in der Regel in unmittelbarer räumlicher Nähe des restlichen partiell rekonfigurierbaren Hardware-Systems angeordnet.

Eine Ausführungsform der Erfindung sieht vor, dass der Lizenzmanager in bestimmten vorgegebenen Zeitabständen überprüft, ob die Nutzungsdauer abgelaufen ist.

Dabei kann vorgesehen sein, dass das Überprüfen mit einer vorgegebenen fixen Taktfrequenz erfolgt, die vom partiell rekonfigurierbaren Hardware-System vorgegeben wird. Die Taktfrequenz kann etwa von der CPU des Hardware-Systems abgeleitet werden.

Eine Ausführungsform der Erfindung sieht vor, dass an den Designer des partiell rekonfigurierbaren Hardware-Systems ein Report ausgegeben wird, falls eine Lizenz abgelaufen ist. Dadurch ist sichergestellt, dass der Designer rasch eine neue Lizenz beschaffen kann und das Hardware-System bald wieder bestimmungsgemäß eingesetzt werden kann.

Eine Änderung der Lizenzdaten einer bestimmten Soft-IP, wie eine Lizenzerteilung, eine Lizenzverlängerung oder eine Lizenzterminierung seitens des Lizenzgebers, sollte entsprechend sicher erfolgen. Insofern kann vorgesehen sein, dass eine Änderung der Lizenzdaten unter Verwendung eines Schlüssels erfolgt, der im nicht-flüchtigen Speicher für Lizenzdaten hinterlegt ist.

Insbesondere kann vorgesehen sein, dass bei einer Änderung der Lizenzdaten ein neuer Schlüssel hinterlegt und der vorhergehende Schlüssel gelöscht wird.

In der Soft-IP teilt in der Regel ein eigener Schaltungsteil zur Lizenzsteuerung dem Lizenzmanager dessen Aktivität mit. Der Lizenzmanager protokolliert dann die zeitliche Aktivität der Soft-IP und überprüft die Gültigkeit der Lizenz. Insofern kann vorgesehen sein, dass im konfigurierbaren Teil des Hardware-Systems für jede Soft-IP ein Schaltungsteil zur Lizenzsteuerung vorgesehen ist, über welchen dem Lizenzmanager die Aktivität der Soft-IP mitgeteilt wird.

Dabei kann vorgesehen sein, dass die Schaltungsteile zur Lizenzsteuerung über eine eigene Lizenzschnittstelle mit dem Lizenzmanager verbunden sind. Über diese Lizenzschnittstelle kommunizieren also dann nur die zur Lizenzsteuerung vorgesehenen Schaltungsteile der einzelnen Soft-IPs mit dem Lizenzmanager.

Die Erfindung umfasst auch ein partiell rekonfigurierbares Hardware-System, insbesondere ein FPGA, zur Durchführung des erfindungsgemäßen Verfahrens. Dabei ist vorgesehen,
- dass in dem nicht konfigurierbaren Teil des Hardware-Systems, oder nur für den nicht konfigurierbaren Teil des Hardware-Systems zugänglich, ein Lizenzmanager vorgesehen ist, der exklusiven Zugriff auf einen nicht-flüchtigen Speicher besitzt, in welchem Lizenzdaten umfassend eine zeitliche Beschränkung der Nutzungsdauer zumindest einer Soft-IP hinterlegt sind, und
- dass der Lizenzmanager so ausgebildet ist, dass vor dem Aktivieren einer bestimmten Soft-IP der Lizenzmanager überprüft, ob die Nutzungsdauer abgelaufen ist, und der Lizenzmanager die Verwendung der Soft-IP nur freigibt, wenn die Nutzungsdauer noch nicht abgelaufen ist.

Wie bereits im Zusammenhang mit dem erfindungsgemäßen Verfahren erläutert, kann vorgesehen sein, dass der Lizenzmanager und der nicht-flüchtige Speicher für die Lizenzdaten im nicht konfigurierbaren Teil des Hardware-Systems angeordnet sind. Oder es könnte vorgesehen sein, dass der Lizenzmanager und der nicht-flüchtige Speicher für die Lizenzdaten in einem weiteren nicht-flüchtigen Speicher abgespeichert und dieser über Hardware mit dem nicht konfigurierbaren Teil des Hardware-Systems verbunden ist, sodass Lizenzmanager und Lizenzdaten vor Inbetriebnahme in das Hardware-System geladen werden können.

Im konfigurierbaren Teil des Hardware-Systems kann für jede Soft-IP ein Schaltungsteil zur Lizenzsteuerung vorgesehen sein, wobei die Schaltungsteile zur Lizenzsteuerung über eine eigene Lizenzschnittstelle mit dem Lizenzmanager verbunden sind.

Durch das erfindungsgemäße Verfahren, bzw. das erfindungsgemäße partiell rekonfigurierbare Hardware-System, unter Verwendung des Lizenzmanagers bekommt der Eigentümer (Lizenzgeber) der Soft-IP die Möglichkeit, bei einer bestimmten partiell rekonfigurierbaren Hardware-System, das sich bereits im Einsatz befindet, die Verwendung der Soft-IP zeitlich zu limitieren.

Andererseits eröffnet sich dadurch auch die Möglichkeit, dem Nutzer von vornherein eine zeitlich limitierte Lizenz anzubieten, was für den Nutzer mit geringeren Kosten verbunden sein kann als eine unlimitierte Lizenz.

Der Eigentümer (Lizenzgeber) der Soft-IP kann dadurch auch die tatsächliche Nutzungsdauer der Soft-IP ermitteln, indem er gegebenenfalls die Nachkäufe an Lizenzen durch den Nutzer auswertet. Daraus lassen sich Nutzungsprofile erstellen.

Mit der vorliegenden Erfindung kann die Berechnung der Lizenz-Nutzung auch über die tatsächliche Aktivität der Soft-IP erfolgen. So kann z.B. keine Lizenzverrechnung für jene Zeiträume erfolgen, wo die Soft-IP nicht verwendet wird, sich also z.B. im Power-Down Modus befindet.

### Kurzbeschreibung der Figuren

Zur weiteren Erläuterung der Erfindung wird im nachfolgenden Teil der Beschreibung auf die Figuren Bezug genommen, aus denen weitere vorteilhafte Ausgestaltungen, Einzelheiten und Weiterbildungen der Erfindung zu entnehmen sind. Die Figuren sind beispielhaft zu verstehen und sollen den Erfindungscharakter zwar darlegen, ihn aber keinesfalls einengen oder gar abschließend wiedergeben. Es zeigt
- Fig. 1: ein Schema eines erfindungsgemäßen FPGAs,
- Fig. 2: ein Ablaufdiagramm zum Lizenzmanagement,
- Fig. 3: ein Ablaufdiagramm zur Installation von neuen Lizenzdaten.

### Ausführung der Erfindung

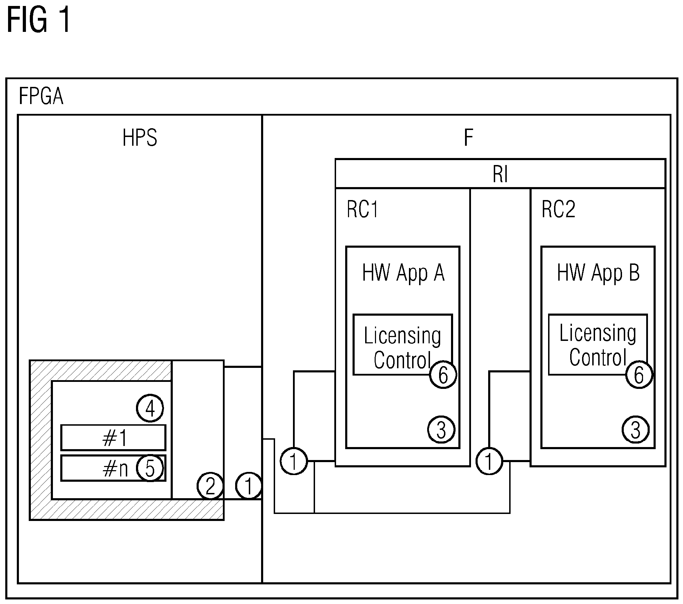

Fig. 1 zeigt ein Schema eines erfindungsgemäßen partiell rekonfigurierbaren FPGAs, das ein Hard Processor System (HPS) HPS, das nicht konfigurierbar ist, und ein konfigurierbares sogenanntes Fabric F umfasst. Zwischen HPS und Fabric F ist eine Lizenzschnittstelle 1 (engl. license interface) implementiert. Über diese Lizenzschnittstelle 1 kommunizieren eine oder mehrere Soft-IPs 3, die im Fabric F vorgesehen sind, mit einem Lizenzmanager 2, der im HPS vorgesehen ist. Der Lizenzmanager 2 hat exklusiven Zugriff auf einen nicht-flüchtigen Speicher 4, welcher Lizenzdaten 5 zum Lizenzmanagement enthält, hier Lizenzdaten #1 bis Lizenzdaten #n. Die Daten zum Lizenzmanagement ermöglichen das Verfolgen der aktuellen Laufzeit einer Soft-IP 3.

Das Fabric F enthält eine Rekonfigurations-Schnittstelle (engl. reconfiguration interface) RI, welche eine oder mehrere Rekonfigurations-Container RC1, RC2 enthält. Jeder Rekonfigurations-Container RC1, RC2 enthält zumindest eine Soft-IP 3, hier mit "HW App A" bzw. "HW App B" bezeichnet, und einen Schaltungsteil 6 zur Lizenzsteuerung. Jeder Rekonfigurations-Container RC1, RC2 steht über eine eigene Lizenzschnittstelle 1 mit der Lizenzschnittstelle 1 des HPS in Verbindung.

Die Aktivität einer Soft-IP 3 wird dem Lizenzmanager 2 über einen Schaltungsteil 6 zur Lizenzsteuerung (engl. licensing control) mitgeteilt, die in der Soft-IP 3 vorgesehen ist. Der Lizenzmanager 2 erlaubt die Ausführung einer Soft-IP 3 nur, wenn gültige Lizenzdaten #1, ..., #n vorhanden sind, z.B. wenn eine zeitlimitierte Lizenz, beispielsweise für 100 Betriebsstunden, für die betreffende Soft-IP 3 noch nicht abgelaufen ist.

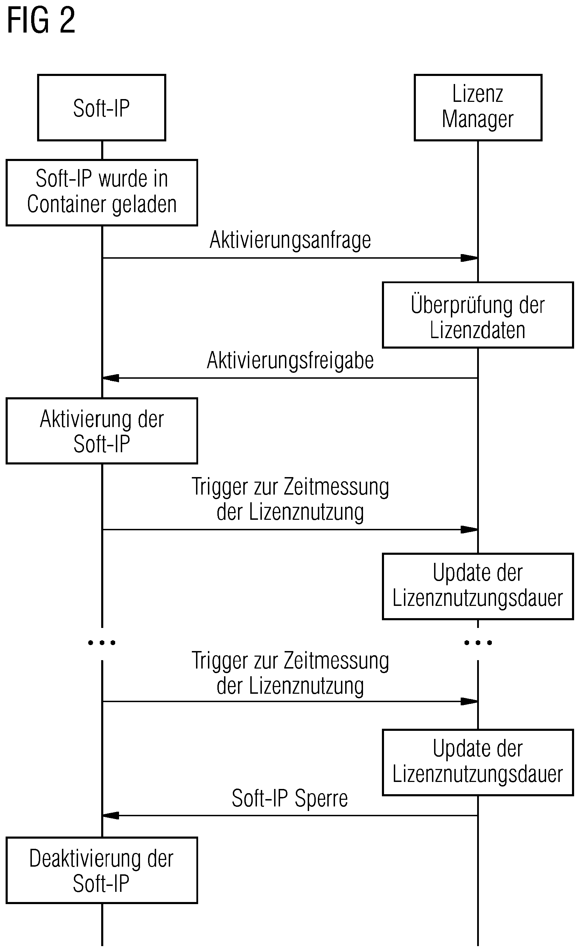

Der Ablauf der einzelnen Schritte des FPGA Lizenzmanagements ist in Fig. 2 dargestellt. Sie zeigt den Kommunikationsverlauf zwischen Soft-IP 3 und Lizenzmanager 2 nach dem erfolgreichen Ladevorgang des Binärfiles der Soft-IP 3 in den entsprechenden Container (Rekonfigurations-Container RC1, RC2) in die Fabric F des FPGA.

Die CPU lädt das Binärfile der Soft-IP 3 über eine Rekonfigurations-Schnittstelle RI in den entsprechenden Rekonfigurations-Container RC1, RC2, siehe Schritt "Soft-IP wurde in den Container geladen". Die Soft-IP 3 überprüft die Verfügbarkeit einer gültigen Lizenz vor Aktivierung der Funktionalität, siehe Schritt "Aktivierungsanfrage". Dazu verbindet sich die Soft-IP 3 über die Lizenzschnittstelle 1 mit dem Lizenzmanager 2. Dieser überprüft die gespeicherten Lizenzdaten 5 für diese Soft-IP 3, siehe Schritt "Überprüfung der Lizenzdaten", und sendet die entsprechenden Aktivierungsdaten an die Soft-IP 3 zurück, siehe Schritt "Aktivierungsfreigabe". Bei fehlenden oder abgelaufenen Lizenzdaten werden keine Aktivierungsdaten an die Soft-IP gesendet, es erfolgt also keine "Aktivierungsfreigabe".

Der Lizenzmanager 2 beinhaltet eine Logik, welche die Lizenzdaten 5 aktualisiert, siehe "Update der Lizenznutzungsdauer". Ist eine Soft-IP 3 geladen, für welche die Lizenz noch nicht abgelaufen ist, siehe Schritt "Aktivierung der Soft-IP", so wird die Laufzeit dieser Soft-IP in den Lizenzdaten 5 aufgezeichnet, siehe Schritt "Trigger zur Zeitmessung der Lizenznutzung". Die Aufzeichnung der Laufzeit kann z.B. zyklisch in bestimmten vorgegebenen Zeitabständen erfolgen, siehe die wiederholten Schritte "Trigger zur Zeitmessung der Lizenznutzung". Die Aufzeichnung erfolgt in der Regel durch Zuhilfenahme einer, vom FPGA vorgegebenen, fixen Taktfrequenz. Ist die verfügbare Laufzeit abgelaufen, war also die Soft-IP z.B. bereits 100 Stunden aktiv, so wird die Funktion der Soft-IP gestoppt. Dazu sendet der Lizenzmanager 2 über die Lizenzschnittstelle 1 ein Deaktivierungskommando ("Soft-IP Sperre") an die Soft-IP, um diese zu deaktivieren (Deaktivierung der Soft-IP"). Der Lizenzmanager 2 kann nun auch einen Report ausgeben, der den Benutzer über die abgelaufene Lizenz benachrichtigt.

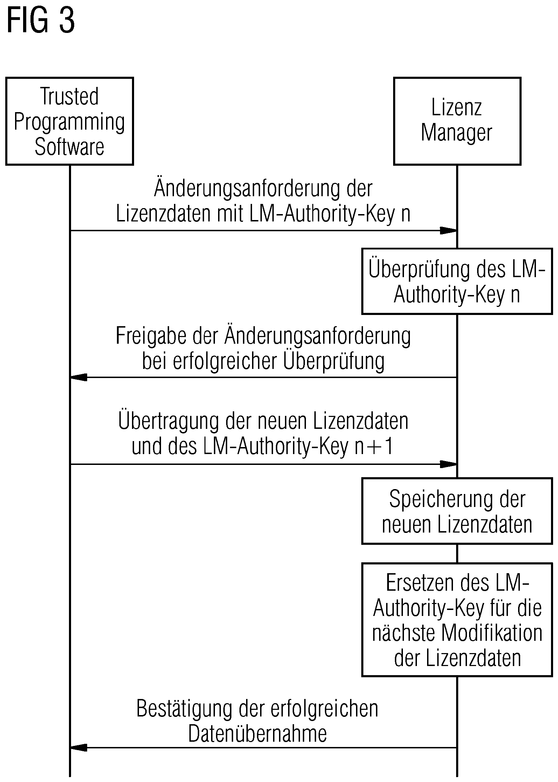

Fig. 3 zeigt den Ablauf einer Installation von neuen Lizenzdaten, genauer den Kommunikationsablauf bei Modifikation der Lizenzdaten 5 im nicht-flüchtigen Speicher 4 des FPGA, zwischen einer sogenannten Trusted Programming Software (z.B. vom FPGA Hersteller) und dem Lizenzmanager 2 im FPGA.

Der Lizenzmanager 2 enthält eine Logik, welche die Lizendaten 5 einer, insbesondere neuen, Soft-IP 3 im nicht-flüchtigen Speicher 4 speichert oder modifiziert. Der dazu benötigte Schlüssel (engl. key) ist als geheimer und geschützter Schlüssel (engl. secret key) im nicht-flüchtigen Speicher 4 abgespeichert und wird Lizenzmanagement-Authority-Key bezeichnet, siehe "LM-Authority-Key" in Fig. 3. Eine Lizenzerteilung, -verlängerung oder -terminierung geschieht entweder durch eine vom FPGA-Hersteller zur Verfügung gestellte Trusted Programming Software oder eine Licensing Soft-IP. Dieser Vorgang ist aus dem Stand der Technik bekannt, siehe dazu etwa die oben zitierte Veröffentlichung "A Pay-per-Use Licensing Scheme for Hardware IP Cores in Recent SRAM-Based FPGAs".

Um die Lizenzdaten 5 vor unerlaubtem Zugriff zu schützen, wird der Lizenzmanagement-Authority-Key nach jeder Lizenzerteilung, -verlängerung oder -terminierung im nicht-flüchtigen Speicher 4 erneuert und der vorherige Lizenzmanagement-Authority-Key gelöscht. Der Soft-IP Eigentümer bzw. Lizenzgeber übermittelt die Lizenzdaten 5 für eine Soft-IP 3 an den FPGA Hersteller. Der FPGA Hersteller fügt den aktuell gültigen Lizenzmanagement-Authority-Key "LM-Authority-Key n" und den Lizenzmanagement-Authority-Key für die nächste Modifikation, den "LM-Authority-Key n+1", den Lizenzdaten 5 hinzu und sendet diese an den FPGA Designer. Dieser aktualisiert die Lizenzdaten 5 für die Soft-IP 3 im FPGA mittels Trusted Programming Software oder Licensing Soft-IP, gemeinsam mit den Daten vom FPGA Hersteller.

In Fig. 3 sendet die Trusted Programming Software eine Änderungsanforderung der Lizenzdaten mit dem "LM-Authority-Key n" an den Lizenzmanager 2. Dieser überprüft den "LM-Authority-Key n" und es erfolgt, "nach erfolgreicher Überprüfung", die "Freigabe der Änderungsanforderung". Es kommt in der Folge zur "Übertragung der neuen Lizenzdaten und des LM-Authority-Key n+1" von der Trusted Programming Software an den Lizenzmanager. Im Lizenzmanager erfolgt die "Speicherung der neuen Lizenzdaten" sowie das "Ersetzen des LM-Authority-Key für die nächste Modifikation der Lizenzdaten". Ist dies erfolgt, sendet der Lizenzmanager eine "Bestätigung der erfolgreichen Datenübernahme" an die Trusted Programming Software.

Als mögliche Variante zum Speicherort des Lizenzmanagers 2 und der Lizenzdaten 5 im HPS kommen ein externer (außerhalb des HPS vorgesehener) nicht-flüchtiger Speicher in Frage, wobei der Lizenzmanager 2 und die Lizenzdaten 5 dann beim FPGA start-up aus dem externen Speicher in den HPS geladen werden.

Dabei kann sich der externe nicht-flüchtige Speicher auch auf einem gesicherten Chip befinden, einem sogenannten Cryptochip, z.B. einem VaultIC420™, wodurch die Daten zusätzlich gegen unbefugte physische Änderung gesichert sind.

Beim erfindungsgemäßen Verfahren können die Rekonfigurations-Schnittstelle RI und Rekonfigurations-Container RC1, RC2, auch weggelassen und stattdessen herkömmliche Bitfiles (ohne vorherige partielle Rekonfiguration) als Soft-IP 3 verwendet werden.

### Bezugszeichenliste:

- 1: Lizenzschnittstelle
- 2: Lizenzmanager
- 3: Soft-IP
- 4: nicht-flüchtiger Speicher
- 5: Lizenzdaten
- 6: Schaltungsteil zur Lizenzsteuerung (engl. licensing control)
- F: Fabric
- HPS: nicht konfigurierbaren Teil des Hardware-Systems (Hard Processor System)
- RC1: Rekonfigurations-Container (Reconfiguration container)
- RC2: Rekonfigurations-Container (Reconfiguration container)
- RI: Rekonfigurations-Schnittstelle (engl. reconfiguration interface)

## Patentansprüche

1. Verfahren zum Verwalten von Lizenzen für Soft-IP auf einem partiell rekonfigurierbaren Hardware-System, insbesondere einem FPGA, **dadurch gekennzeichnet,**
- **dass** in dem nicht konfigurierbaren Teil, HPS, des Hardware-Systems, oder nur für den nicht konfigurierbaren Teil des Hardware-Systems, HPS, zugänglich, ein Lizenzmanager (2) vorgesehen ist, der exklusiven Zugriff auf einen nicht-flüchtigen Speicher (4) besitzt, in welchem Lizenzdaten (5) umfassend eine zeitliche Beschränkung der Nutzungsdauer zumindest einer Soft-IP (3) hinterlegt sind,
- **dass** vor dem Aktivieren einer bestimmten Soft-IP (3) der Lizenzmanager (2) überprüft, ob die Nutzungsdauer abgelaufen ist, und
- **dass** der Lizenzmanager (2) die Verwendung der Soft-IP (3) nur freigibt, wenn die Nutzungsdauer noch nicht abgelaufen ist,
- **dass** eine Änderung der Lizenzdaten (5) unter Verwendung eines Schlüssels erfolgt, der im nicht-flüchtigen Speicher (4) für Lizenzdaten (5) hinterlegt ist, und
- bei einer Änderung der Lizenzdaten (5) ein neuer Schlüssel hinterlegt und der vorhergehende Schlüssel gelöscht wird.

2. Verfahren nach Anspruch 1, **dadurch gekennzeichnet, dass** der Lizenzmanager (2) in bestimmten vorgegebenen Zeitabständen überprüft, ob die Nutzungsdauer abgelaufen ist.

3. Verfahren nach Anspruch 2, **dadurch gekennzeichnet, dass** das Überprüfen mit einer vorgegebenen fixen Taktfrequenz erfolgt, die vom partiell rekonfigurierbaren Hardware-System vorgegeben wird.

4. Verfahren nach einem der vorhergehenden Ansprüche, **dadurch gekennzeichnet, dass** an den Designer des partiell rekonfigurierbaren Hardware-Systems ein Report ausgegeben wird, falls eine Lizenz abgelaufen ist.

5. Verfahren nach einem der vorhergehenden Ansprüche, **dadurch gekennzeichnet, dass** der Lizenzmanager (2) und der nicht-flüchtige Speicher (4) für die Lizenzdaten (5) im nicht konfigurierbaren Teil (HPS) des Hardware-Systems angeordnet sind.

6. Verfahren nach einem der Ansprüche 1 bis 5, **dadurch gekennzeichnet, dass** der Lizenzmanager (2) und der nicht-flüchtige Speicher (4) für die Lizenzdaten (5) in einem weiteren nicht-flüchtigen Speicher abgespeichert und dieser über Hardware mit dem nicht konfigurierbaren Teil (HPS) des Hardware-Systems verbunden ist, sodass Lizenzmanager (2) und Lizenzdaten (5) vor Inbetriebnahme in das Hardware-System geladen werden.

7. Partiell rekonfigurierbares Hardware-System, insbesondere ein FPGA, zur Durchführung des Verfahrens nach einem der Ansprüche 1 bis 6, **dadurch gekennzeichnet,**
- **dass** in dem nicht konfigurierbaren Teil, HPS, des Hardware-Systems, oder nur für den nicht konfigurierbaren Teil, HPS, des Hardware-Systems zugänglich, ein Lizenzmanager (2) vorgesehen ist, der exklusiven Zugriff auf einen nicht-flüchtigen Speicher (4) besitzt, in welchem Lizenzdaten (5) umfassend eine zeitliche Beschränkung der Nutzungsdauer zumindest einer Soft-IP (3) hinterlegt sind, und
- **dass** der Lizenzmanager (2) so ausgebildet ist, dass vor dem Aktivieren einer bestimmten Soft-IP (3) der Lizenzmanager überprüft, ob die Nutzungsdauer abgelaufen ist, und der Lizenzmanager (2) die Verwendung der Soft-IP (3) nur freigibt, wenn die Nutzungsdauer noch nicht abgelaufen ist, und
- **dass** der Lizenzmanager (2) weiterhin dazu ausgebildet ist, eine Änderung der Lizenzdaten unter Verwendung eines Schlüssels zu überprüfen und nach erfolgreicher Überprüfung neue Lizenzdaten (5) zu hinterlegen und den Schlüssel durch einen neuen Schlüssel zu ersetzen.

8. Partiell rekonfigurierbares Hardware-System nach Anspruch 7, **dadurch gekennzeichnet, dass** der Lizenzmanager (2) und der nicht-flüchtige Speicher (4) für die Lizenzdaten (5) im nicht konfigurierbaren Teil, HPS, des Hardware-Systems angeordnet sind.

9. Partiell rekonfigurierbares Hardware-System nach Anspruch 7, **dadurch gekennzeichnet, dass** der Lizenzmanager (2) und der nicht-flüchtige Speicher (4) für die Lizenzdaten (5) in einem weiteren nicht-flüchtigen Speicher abgespeichert und dieser über Hardware mit dem nicht konfigurierbaren Teil, HPS, des Hardware-Systems verbunden ist, sodass Lizenzmanager (2) und Lizenzdaten (5) vor Inbetriebnahme in das Hardware-System geladen werden können.

10. Partiell rekonfigurierbares Hardware-System nach einem der Ansprüche 7 bis 9, **dadurch gekennzeichnet, dass** im konfigurierbaren Teil (F) des Hardware-Systems für jede Soft-IP (3) ein Schaltungsteil (6) zur Lizenzsteuerung vorgesehen ist, wobei die Schaltungsteile (6) zur Lizenzsteuerung über eine eigene Lizenzschnittstelle (1) mit dem Lizenzmanager (2) verbunden sind.

## Claims

1. Method for managing licenses for soft IP on a partially reconfigurable hardware system, in particular an FPGA, **characterised in that**
- a license manager (2) is provided in the non-configurable part, HPS, of the hardware system, or accessible only for the non-configurable part of the hardware system, HPS, which license manager has exclusive access to a non-volatile memory (4) in which license data (5) comprising a time restriction of the useful life of at least one soft IP (3) is stored,
- before activating a particular soft IP (3), the license manager (2) checks whether the useful life has expired, and
- the license manager (2) only releases use of the soft IP (3) if the useful life has not yet expired,
- the license data (5) is changed using a key, which is stored in the non-volatile memory (4) for license data (5), and
- when the license data (5) is changed, a new key is stored and the preceding key is deleted.

2. Method according to claim 1, **characterised in that** the license manager (2) checks whether the useful life has expired at particular, specified time intervals.

3. Method according to claim 2, **characterised in that** checking takes place with a specified fixed clock frequency which is specified by the partially reconfigurable hardware system.

4. Method according to one of the preceding claims, **characterised in that** a report is output to the designer of the partially reconfigurable hardware system if a license has expired.

5. Method according to one of the preceding claims, **characterised in that** the license manager (2) and the non-volatile memory (4) for the license data (5) are arranged in the non-configurable part (HPS) of the hardware system.

6. Method according to one of claims 1 to 5, **characterised in that** the license manager (2) and the non-volatile memory (4) for the license data (5) are saved in a further non-volatile memory and this is connected by hardware to the non-configurable part (HPS) of the hardware system, so license manager (2) and license data (5) are loaded into the hardware system before commissioning.

7. Partially reconfigurable hardware system, in particular an FPGA, for carrying out the method according to one of claims 1 to 6, **characterised in that**
- a license manager (2) is provided in the non-configurable part, HPS, of the hardware system, or accessible only for the non-configurable part of the hardware system, HPS, which license manager has exclusive access to a non-volatile memory (4) in which license data (5) comprising a time restriction of the useful life of at least one soft IP (3) is stored, and
- the license manager (2) is designed in such a way that before activating a particular soft IP (3), the license manager checks whether the useful life has expired, and the license manager (2) only releases use of the soft IP (3) if the useful life has not yet expired, and
- the license manager (2) is furthermore designed to check a change in the license data using a key and after successful checking, to store new license data (5) and to replace the key with a new key.

8. Partially reconfigurable hardware system according to claim 7, **characterised in that** the license manager (2) and the non-volatile memory (4) for the license data (5) are arranged in the non-configurable part, HPS, of the hardware system.

9. Partially reconfigurable hardware system according to claim 7, **characterised in that** the license manager (2) and the non-volatile memory (4) for the license data (5) are stored in a further non-volatile memory and this is connected by hardware to the non-configurable part, HPS, of the hardware system, so license manager (2) and license data (5) can be loaded into the hardware system before commissioning.

10. Partially reconfigurable hardware system according to one of claims 7 to 9, **characterised in that** a circuit section (6) for licensing control is provided in the configurable part (F) of the hardware system for each soft IP (3), wherein the circuit sections (6) for licensing control are connected to the license manager (2) by a separate license interface (1).

## Revendications

1. Procédé destiné à la gestion de licence pour logiciel IP sur un système matériel partiellement reconfigurable, en particulier un FPGA, **caractérisé en ce**
- **qu'**un gestionnaire de licence (2) est prévu dans la partie non configurable, HPS, du système matériel, ou accessible uniquement pour la partie non configurable, HPS, du système matériel, qui possède un accès exclusif à une mémoire non-volatile (4), dans laquelle des données de licence (5) comprenant une limitation temporelle de la durée d'utilisation d'au moins un logiciel IP (3) sont déposées,
- **qu'**avant l'activation d'un logiciel IP (3) défini, le gestionnaire de licence (2) vérifie si la durée d'utilisation est écoulée, et
- **que** le gestionnaire de licence (2) n'active l'utilisation du logiciel IP (3) que si la durée d'utilisation n'est pas encore écoulée,
- **qu'**une modification des données de licence (5) s'effectue en utilisant une clé qui est présente dans la mémoire non-volatile (4) pour les données de licence (5), et
- **qu'**en cas de modification des données de licence (5), une nouvelle clé est déposée et la clé précédente est supprimée.

2. Procédé selon la revendication 1, **caractérisé en ce que** le gestionnaire de licence (2) vérifie à intervalles prédéfinis si la durée d'utilisation est écoulée.

3. Procédé selon la revendication 2, **caractérisé en ce que** la vérification est effectuée à une fréquence cadencée fixe prédéfinie, qui est prédéfinie par le système matériel partiellement reconfigurable.

4. Procédé selon l'une des revendications précédentes, **caractérisé en ce qu'**un rapport est envoyé au concepteur du système matériel partiellement reconfigurable, si une licence est échue.

5. Procédé selon l'une des revendications précédentes, **caractérisé en ce que** le gestionnaire de licence (2) et la mémoire non-volatile (4) pour les données de licence (5) sont disposés dans la partie non configurable (HPS) du système matériel.

6. Procédé selon l'une des revendications 1 à 5, **caractérisé en ce que** le gestionnaire de licence (2) et la mémoire non-volatile (4) pour les données de licence (5) sont enregistrés dans une autre mémoire non-volatile et celle-ci est reliée par matériel à la partie non configurable (HPS) du système matériel, de sorte que le gestionnaire de licence (2) et les données de licence (5) sont chargés dans le système matériel avant la mise en service.

7. Système matériel partiellement reconfigurable, en particulier un FPGA, pour exécuter le procédé selon l'une des revendications 1 à 6, **caractérisé en ce**
- **qu'**un gestionnaire de licence (2) est prévu dans la partie non configurable, HPS, du système matériel, ou accessible uniquement pour la partie non configurable, HPS, du système matériel, qui possède un accès exclusif à une mémoire non-volatile (4), dans laquelle des données de licence (5) comprenant une limitation temporelle de la durée d'utilisation d'au moins un logiciel IP (3) sont déposées, et
- **que** le gestionnaire de licence (2) est ainsi conçu qu'avant l'activation d'un logiciel IP (3) défini, le gestionnaire de licence (2) vérifie si la durée d'utilisation est écoulée, et le gestionnaire de licence (2) n'active l'utilisation du logiciel IP (3) que si la durée d'utilisation n'est pas encore écoulée, et
- **que** le gestionnaire de licence (2) est en outre conçu pour vérifier une modification des données de licence en utilisant une clé et qu'après vérification réussie, pour déposer de nouvelles données de licence (5) et remplacer la clé par une nouvelle clé.

8. Système matériel partiellement reconfigurable selon la revendication 7, **caractérisé en ce que** le gestionnaire de licence (2) et la mémoire non-volatile (4) pour les données de licence (5) sont disposés dans la partie non configurable (HPS) du système matériel.

9. Système matériel partiellement reconfigurable selon la revendication 7, **caractérisé en ce que** le gestionnaire de licence (2) et la mémoire non-volatile (4) pour les données de licence (5) sont enregistrés dans une autre mémoire non-volatile et celle-ci est reliée par matériel à la partie non configurable, HPS, du système matériel, de sorte que le gestionnaire de licence (2) et les données de licence (5) peuvent être chargés dans le système matériel avant la mise en service.

10. Système matériel partiellement reconfigurable selon l'une des revendications 7 à 9, **caractérisé en ce qu'**une partie de connexion (6) pour piloter les licences est prévue dans la partie configurable (F) du système matériel pour chaque logiciel IP (3), dans lequel les parties de connexion (6) pour piloter les licences sont reliées au gestionnaire de licence (2) par une propre interface de licence (1).
